Europäisches Patentamt

European Patent Office

Office européen des brevets

(11) Publication number: **0 283 527 B1**

(12) **EUROPEAN PATENT SPECIFICATION**

(45) Date of publication of patent specification: **09.12.92**  (51) Int. Cl.5: **B65G 47/14**

(21) Application number: **87104124.0**

(22) Date of filing: **20.03.87**

(54) **Rotating ring orienting feeder.**

(43) Date of publication of application:
**28.09.88 Bulletin 88/39**

(45) Publication of the grant of the patent:
**09.12.92 Bulletin 92/50**

(84) Designated Contracting States:
**AT BE CH DE ES FR GB IT LI LU NL SE**

(56) References cited:
**FR-A- 2 507 118
US-A- 2 744 612
US-A- 3 485 338
US-A- 3 684 077
US-A- 4 429 808**

(73) Proprietor: **HOPPMANN CORPORATION
14560 Lee Road P.O. Box 601
Chantilly Virginia 22021(US)**

(72) Inventor: **Hoppmann, Kurt H.
3616 Ridgeway Terrace
Falls Church, VA 22044(US)**
Inventor: **Lin, James G.
7302 Skibbereen Place
Springfield, VA 22153(US)**
Inventor: **Schmitt, Werner H.
6385 Lakeview Drive
Falls Church, VA 22041(US)**

(74) Representative: **Patentanwälte Kirschner &
Grosse
Forstenrieder Allee 59
W-8000 München 71(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

BACKGROUND OF THE INVENTION

Field of the Invention

The present invention is directed to a rotating ring orienting feeder wherein articles which are not disposed on a rotating ring in a predetermined orientation are returned to a hopper for resupply.

Description of Background Art

Conventionally, centrifugal feeders consist of a bowl, a ramp and an elevated rim. Articles are supplied to the bowl by a prefeeder. As the bowl rotates, parts within the bowl are forced outwardly against an upwardly projection wall of the bowl. A stationary ramp or a rotating ramp convey the articles upwardly onto the elevated rim. Articles disposed on the elevated rim are qualified (sorted) by means of gates, air jets and/or profile pathways. Articles which are not disposed in a predetermined orientation can only be returned from the inner peripheral surface of the elevated rim back to the bowl.

The US-A-4 429 808 describes a centrifugal dual drive rotary feeder with an indirect disc in the bowl for transportation of the articles from an article reservoir to the elevated rim. The rim, which is rotating at a higher angular velocity than that of the disc, receives the articles, while various appropriate means operate on the articles so as to orient them uniformly. Articles, which are not properly oriented, are reintroduced in the reservoir.

FR-A-2 507 118 discloses a centrifugal feeder in which the bowl is arranged in an inclined plane and is rotating relative to a horizontal platform arranged within the bowl.

The performance of a centrifugal feeder is very smooth and fast compared with a conventional vibratory feeder. Articles can be discharged from the centrifugal feeder in a more expeditious manner than from a vibratory feeder. Centrifugal feeders perform best when a high rate of articles are to be delivered from the centrifugal feeder. Centrifugal force is developed by the rotating bowl which propel the articles to the outer peripheral upstanding wall of the rotary bowl. As the bowl rotates faster, a larger number of articles can be discharged from the elevated rim.

US-A.3 684 077 is a rotating ring orienting feeder having a stationary hopper, as defined in the preamble of claim 1. The ring has a central opening into which incorrectly oriented parts, separated from correctly oriented parts, are returned to the hopper via an additional conveyor. Both the ring and the conveyer from the hopper are driven.

Conventional centrifugal feeders require the quantity of articles supplied to the bowl to be limited to optimize the feeding process in view of the fact that limited space is provided for the stationary ramp or rotating ramp for conveying the articles upwardly to the elevated rim. Precise delivery of articles to the bowl is demanded by the prefeeder. This precise delivery is achieved by means of a level sensor in the bowl which indicates when a maximum permissible number of articles are disposed within the bowl.

SUMMARY AND OBJECTS OF THE PRESENT INVENTION

The rotating ring orienting feeder according to the present invention is not a centrifugal feeder. The feeder performs better over an entire range of article delivery from a few articles per minute to a higher rate of articles per minute than is presently capable of being delivered from centrifugal feeders.

The present invention permits a great deal of economy in construction by unifying the prefeeder and the orienting ring into a single device.

The rotating ring and orienting feeder of the present invention does not require a bowl for feeding the parts to the elevated rim. Thus, overfeeding of the articles to the orienting ring may occur with the surplus articles falling off the ring and returning to the infeed conveyor disposed within the hopper. By overfeeding the orienting ring an optimum number of articles can easily be maintained on the ring without the aid of any orienting mechanism. The conveyor belt disposed within the hopper may be equipped with a motor drive to permit the conveyor belt to be driven at a desirable speed.

The articles conveyed to the orienting ring can be singulated and preoriented by means of gauging and overflow restriction patterns similar to those used in centrifugal feeders. The orienting ring optimizes the number of articles which can be supplied at any desirable speed. Therefore, a smaller orienting ring is equivalent to a larger feeder bowl system, yet requires about half the space of the equivalent prefeeder-centrifugal feeder which is presently required.

There and other objects of the present invention are achieved by providing a rotating ring orienting feeder as defined in claim 1.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

BRIEF DESCRIPTION OF THE DRAWINGS

The present invention will become more fully understood from the detailed description given hereinbelow and the accompanying drawings which are given by way of illustration only, and thus are not limitative of the present invention, and wherein:

Figure 1 is a top plan view of the rotating ring orienting feeder according to the present invention;

Figure 2 is a partial cross-sectional view of the rotating ring orienting feeder as illustrated in Figure 1;

Figure 3 is a perspective view of another embodiment of the rotating ring orienting feeder according to the present invention;

Figure 4 is a top plan view of another embodiment of the rotating ring orienting feeder according to the present invention;

Figure 5 is a schematic top plan elevation illustrating an orientation of articles wherein the rim is rotating at a slow speed;

Figure 6 is a top plan schematic illustration of the rotating rim rotating at a faster speed;

Figure 7 is a top plan schematic illustration of the rotating rim illustrating a storage capability of the present invention;

Figure 8 is a cross-sectional view illustrating an outer support for the rotating rim;

Figure 9 is a cross-sectional view illustrating an inner support for the rotating rim;

Figure 10 is a cross-sectional view illustrating a support for the rotating rim being disposed beneath the rotating rim;

Figure 11 is a cross-sectional view illustrating a support for the rotating rim being disposed beneath the rotating rim;

Figure 12 is a cross-sectional view illustrating a support for the rotating rim being disposed beneath the rotating rim;

Figure 13 is a cross-sectional view of a rotating rim illustrating an orientation of an article on the rim;

Figure 14 is a cross-sectional view of a rotating rim illustrating an orienting of an article on the rim;

Figure 15 is a cross-sectional view illustrating a double orientation on the rotating rim;

Figure 16 is a cross-sectional view illustrating a double orientation on the rim;

Figure 17 is a top plan view of another embodiment of the present invention;

Figure 18 is a partial cross-sectional view of the rotating ring orienting feeder as illustrated in Figure 17;

Figure 19 is a partial cross-sectional view of the disposition of the rotating ring relative to the supply conveyor;

Figure 20 is a partial cross-sectional view of another embodiment of the rotating ring orienting feeder according to the present invention;

Figure 21 is a top plan view of a disc pocket feeder utilized in the embodiment illustrated in Figure 20; and

Figure 22 is a cross-sectional view illustrating a support and backup plate of the disc with pockets utilized in combination with the rotating ring orienting feeder illustrated in Figure 20.

BRIEF DESCRIPTION OF THE PREFERRED EMBODIMENT$

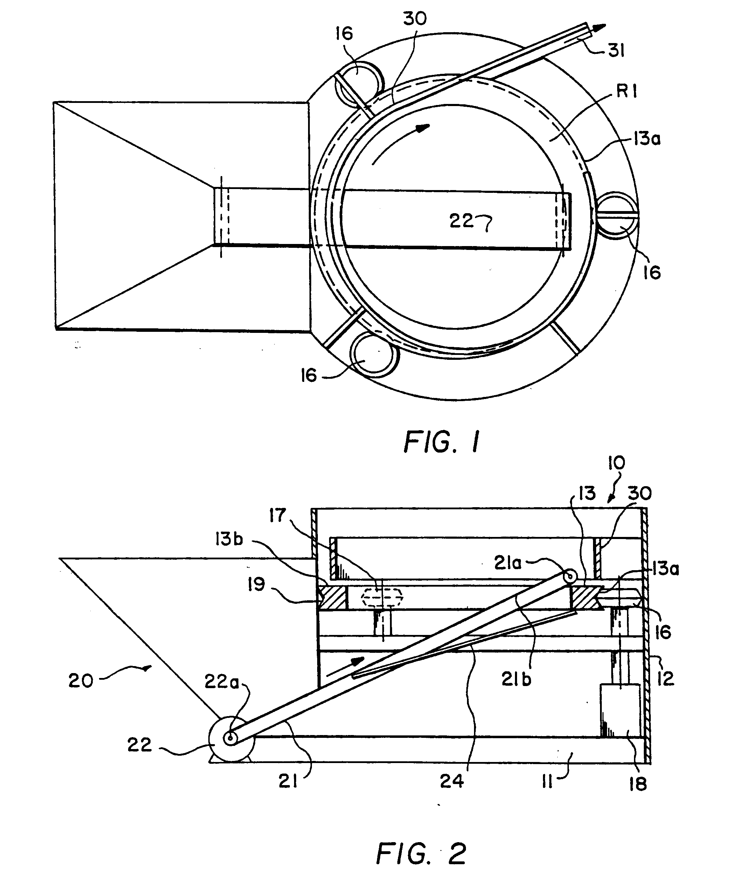

As illustrated in Figures 1 and 2, a rotating ring orienting feeder 10 is provided for supplying articles from a hopper 20 to a rotating ring 13. The hopper 20 and a housing 12 are mounted on a base member 11. Supports 16 are affixed to the housing 12 for maintaining the ring 13 in a substantially horizontal position. As illustrated in Figure 2, the support 16 may be disposed within the inner peripheral surface of the ring 13 as illustrated in dotted lines by support 17.

As illustrated in Figure 1, three or more supports 16 may be positioned around the outer peripheral edge 18a of the ring 13. One or more of the supports 16 may be connected to a motor 18 for imparting rotation to the ring 13. A V-shaped groove 19 may be positioned on the outer peripheral surface 13a of the ring 13 to ensure stability of the ring 13 relative to the supports 16 and the housing 12.

A conveyor belt 21 is provided with the hopper 20. The conveyor 21 supplies articles upwardly from the hopper 20 to the upper surface 13b of the ring 13. The conveyor belt 21 is operatively connected to a motor 22 for imparting rotation thereto. The motor 22 includes a shaft 22a which may form one end of the endless conveyor belt 21. The other end of the conveyor belt 21 disposed adjacent to the upper surface 13b of the ring 13 may be disposed around a pulley 21a. The pulley 21a is connected to a support 21b for maintaining the distance of the pulley 21a relative to the shaft 22a of the motor 22.

A return plate 24 is mounted beneath the ring 13 for returning articles to the hopper 20. Articles supplied upwardly by means of the conveyor belt 21 are deposited onto the upper surface 13b of the ring 13. Articles which are not disposed in the proper orientation fall off of the ring 13 onto the return plate 24 to be resupplied back to the hopper 20.

An exit ramp 31 is provided for discharging articles from the ring 13. The exit ramp 31 functions together with a wall 30 to singulate the articles as they are discharged from the ring 13. As discussed hereafter the articles discharged from the ring 13 may be disposed in two lines on the upper surface 13b of the ring 13.

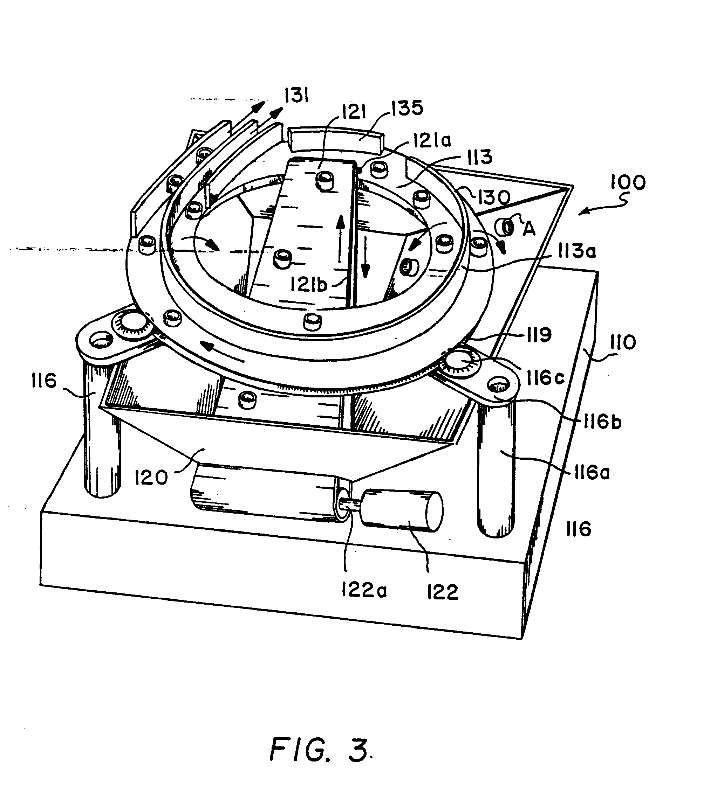

Figure 3 is a perspective view of a rotating ring orienting feeder 100. A base 110 is provided for supporting a hopper 120. A ring 113 is mounted on supports 116 in a substantially horizontal position.

The supports 116 include upwardly projecting legs 116a having substantially horizontal arms 116b. The substantially horizontal arms 116b support bearing members 116c which engage an outer peripheral surface 113a of the ring 113. The bearing members 116c may include a V-shaped member for engaging a V-shaped groove 119 in the outer peripheral surface 113a of the ring 113. The hopper 120 is positioned beneath the entire ring 113. In this manner, articles conveyed upwardly by the conveyor 121 are discharged adjacent to the pulley 121a. The articles A are rotated on the upper surface 13b of the ring 13 to the upwardly projecting wall 130. There, the articles are divided into one or more paths. Articles rotated along the wall 130 may be oriented to a predetermined orientation. Articles which are not in the predetermined orientation are returned back to the hopper 120 for resupply by means of the conveyor 121.

As articles are rotated along the wall 130, they are discharged at the exit ramp 131. The articles at the exit ramp 131 are disposed in the proper predetermined orientation in at least two files.

The elevating conveyor 121 is disposed around a pulley 121a positioned at the upper end thereof. A motor 122 is provided with a shaft 122a adjacent to the other end of the conveyor 121. A support 121b is mounted between the shaft 122a and the pulley 121a for accurately positioning the end of the conveyor 121. A wall 135 is mounted on the base 110 adjacent to the conveyor 121. The wall 135 ensures that articles supplied to the ring 113 do not immediately exit from the ring prior to being divided into at least two files.

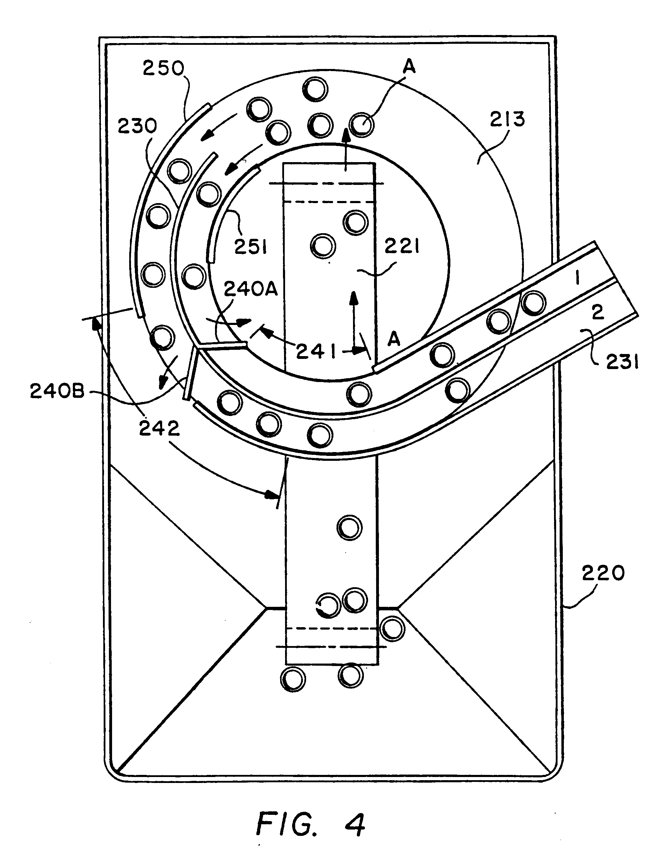

Figure 4 is a top plan view of another embodiment of the present invention. A hopper 220 is provided for containing a plurality of articles. A ring 213 is mounted above the hopper 220. A conveyor 221 conveys articles from the hopper 220 upwardly onto the ring 213. The articles A disposed on the ring 213 are rotated past a wall 230. At this point, the articles are divided into one or more files. Qualifiers 240A, 240B are mounted above the two files of articles A. Articles A which are not in a proper orientation are returned to the hopper 220 to be resupplied by means of the conveyor 221. Articles which are in the proper predetermined orientation are rotated towards the exit ramp 231. In this way, at least two files of articles can be delivered from the rotating ring 213 to the exit ramp 231. Articles which are not in the proper predetermined orientation are return to the hopper 220 from either the inside qualifying segment 241 or the outside qualifying segment 242. A wall 250 is provided around a portion of the ring 213 to ensure that the articles arrive at the outside qualification segment 242. Similarly, a wall 251 is provided adjacent to the ring 213 to ensure that the articles arrive at the inside qualification segment 241.

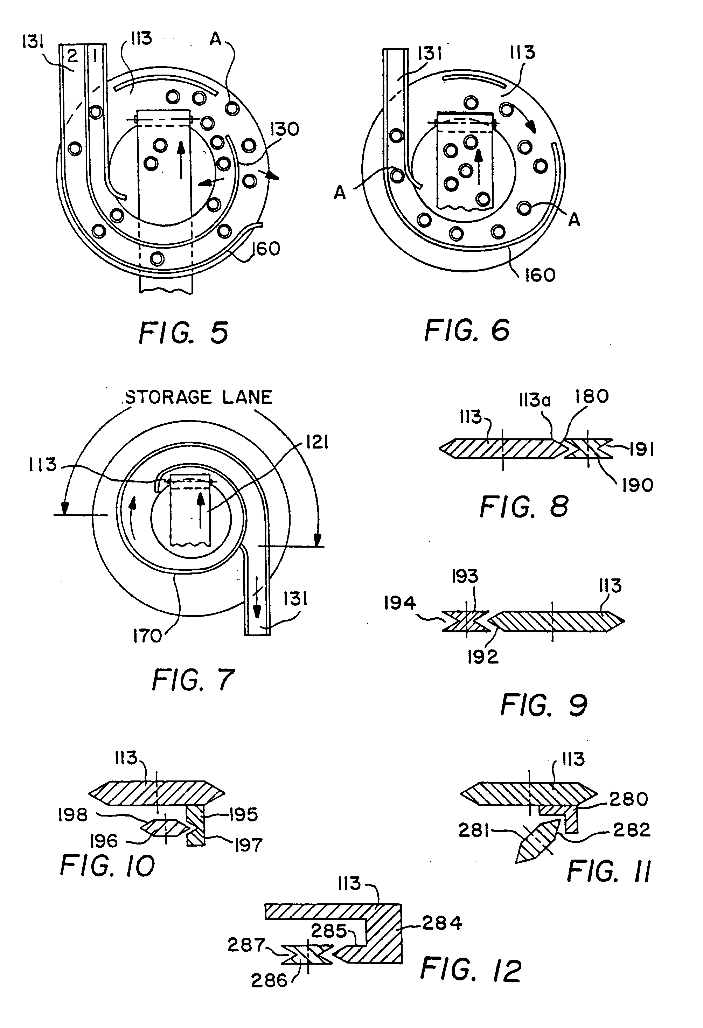

Figure 5 is a schematic view illustrating the rotating ring orienting feeder operating at a slow speed. By rotating the ring 113 at a slow speed, articles A are divided into two paths by the wall 130. Articles A are thereafter discharged at the exit ramp 131. Articles A may be qualified on either the interior portion of the ring 113 or the exterior portion of the ring 113 prior to arriving at a wall 160.

Figure 6 is a schematic illustration of the rotating ring orienting feeder operating at a faster speed. In this embodiment, the articles A are qualified inwardly of the rotating ring 113. The wall 160 confines the articles to be discharged in a single file at the exit ramp 131.

Figure 7 is a schematic illustration of the rotating ring orienting feeder which may function to store articles. The articles are loaded onto the ring 113 by means of the conveyor 121. A wall 170 guides the articles supplied by the conveyor 121 to the ring 113. The articles are qualified to return back to the hopper over the inner peripheral surface of the rotating ring 113. Thereafter, the articles are stored along a substantial path prior to being discharged at the exit ramp 131.

Figures 8-12 illustrate a number of various support structures for positioning the ring 113 in a substantially horizontal position. As illustrated in Figure 8, the ring 113 may include a V-shaped projection at the outer peripheral surface 113A. This V-shaped projection 180 is designed to engage a support 190. The support 190 includes a V-shaped groove 191 disposed therein. In this manner, the positioning of the ring 113 is reliably controlled.

Similarly, as illustrated in Figure 9, the ring 113 may include a V-shaped projection 192 disposed along the inner surface thereof. The V-shaped projection 192 is designed to mate with a support 193. The support 193 includes a V-shaped groove 194. In this manner, the ring 113 can be accurately positioned to rotate in a substantially horizontal position.

As illustrated in Figure 10, the ring 113 may include a downwardly projecting block 195 disposed adjacent the outer periphery thereof. A support 196 may be positioned adjacent to the downwardly projecting member 195. A V-shaped groove 197 is positioned in the downwardly projecting block 195. Similarly, a V-shaped projection 198 is provided on the support 196. In this manner, the ring 113 may be supported and rotated with all of the moving elements being completely concealed.

Similarly, as illustrated in Figure 11, the ring 113 may include an L-shaped bracket 280 affixed to the bottom surface thereof. A support 281 may be positioned to engage the L-shaped bracket. The support 281 includes a V-shaped projection 282 which actually meshes with the L-shaped bracket 280. Again, the moving parts for rotating and supporting the ring 113 are concealed.

Figure 12 illustrates another embodiment wherein the ring 113 includes an integral downwardly projecting member 284 disposed around the outer peripheral surface thereof. The downwardly projecting member 284 includes a V-shaped projection 285. A support 286 is provided adjacent to the V-shaped projection 285. The support 286 includes a V-shaped groove 287. The V-shaped groove 287 engages the V-shaped projection 285 to support and impart rotation to the ring 113. Again, the moving parts for supporting and rotating the ring 113 are concealed.

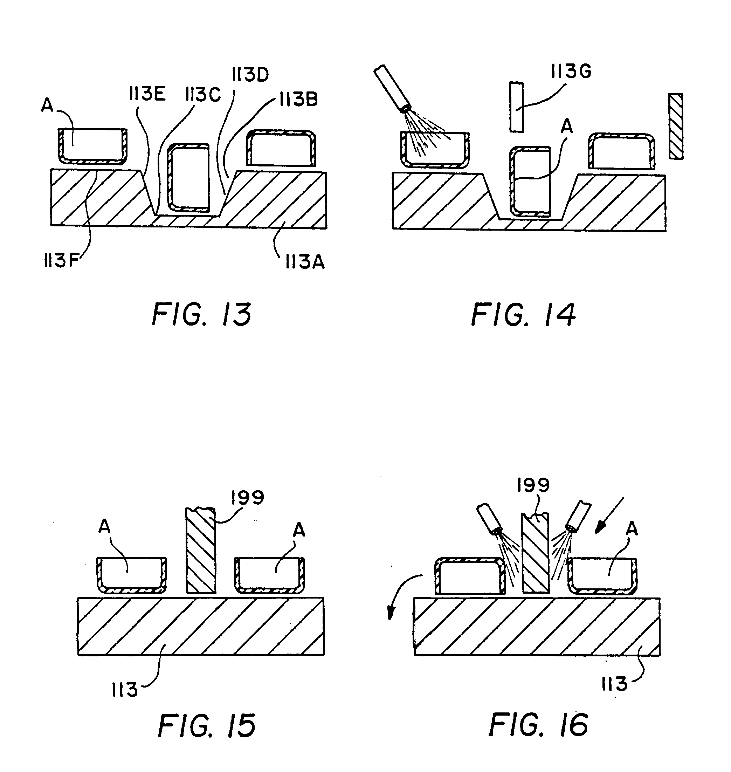

Figures 13-16 illustrate a few embodiments for the upper surface of the ring 113. As illustrated in Figure 13, the ring 113A may include a groove 113B. The groove 113B includes a lower surface 113C, an inclined side wall 113D and a second inclined side wall 113E. An article A may initially be positioned adjacent to an inner surface 113F of the ring 113A. By directing a jet of air to the article A, articles which are oriented in the wrong orientation may be moved into the recess 113D. A wall 113G can ensure that only one article A is moved into the recess 113D at any particular point along the ring 113A. Thereafter, a continued supply of air to the article A will turn the article A to be in the proper orientation as illustrated to the right in Figure 14.

Figures 15 and 16 illustrate an embodiment for providing double orientation on the ring 113. As illustrated in Figure 15, a wall 199 may be provided to divide articles A into two paths. As illustrated in Figure 16, articles may be qualified by increasing the width of the wall 199 and supplying a stream of air to the articles A. In this manner, articles which are in the proper orientation would be retained on the ring 113. Articles which are not in the proper orientation will fall from the ring 113 back into the hopper.

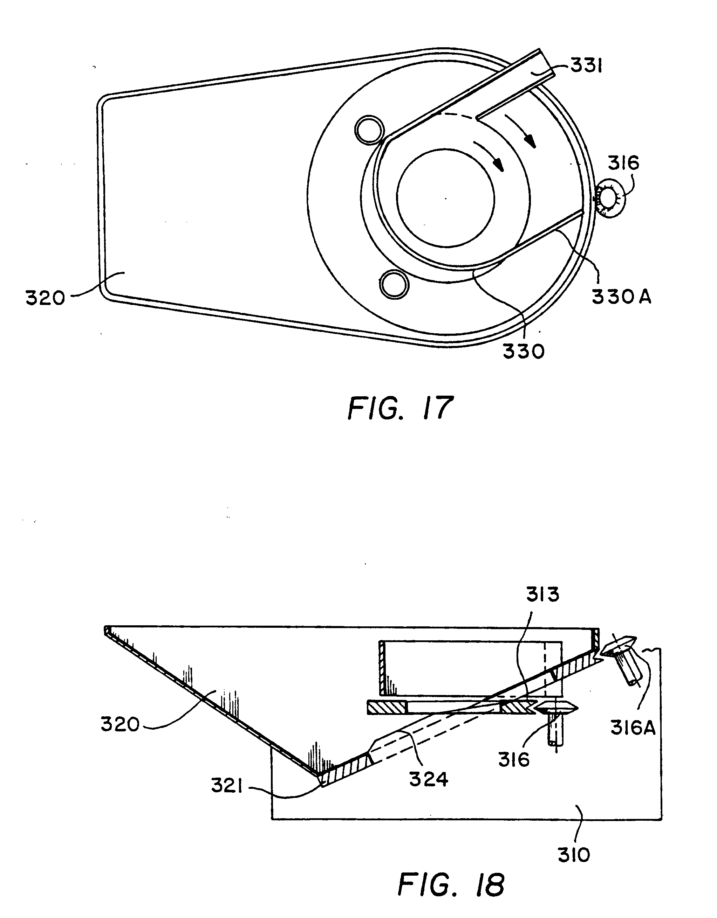

Figures 17-19 illustrate another embodiment of the present invention. A base 310 is provided to form a hopper 320. A ring 313 is mounted in a substantially horizontal position above the hopper 320. A conveyor ring 321 is provided for supplying articles from the hopper 320 to the upper surface of the ring 313. A baffle wall 324 is mounted beneath the ring 313 to direct articles back into the hopper 320 so as to be resupplied by means of the conveying ring 321 upwardly to the ring 313. Support rollers 316 are provided to maintain the ring 313 in a substantially horizontal position. Support rollers 316A are provided adjacent to the conveyor ring 321 for maintaining the position of the conveyor ring 321. As previously discussed, the ring 313 and the conveyor ring 321 may include a V-shaped groove in the outer surface thereof which will mate with a V-shaped projection on the support member 316, 316A. A wiper wall 330A is disposed adjacent to a directing wall 330. Articles conveyed by means of the conveyor ring 321 upwardly onto the ring 313 are moved along the wall 330 to the exit ramp 331.

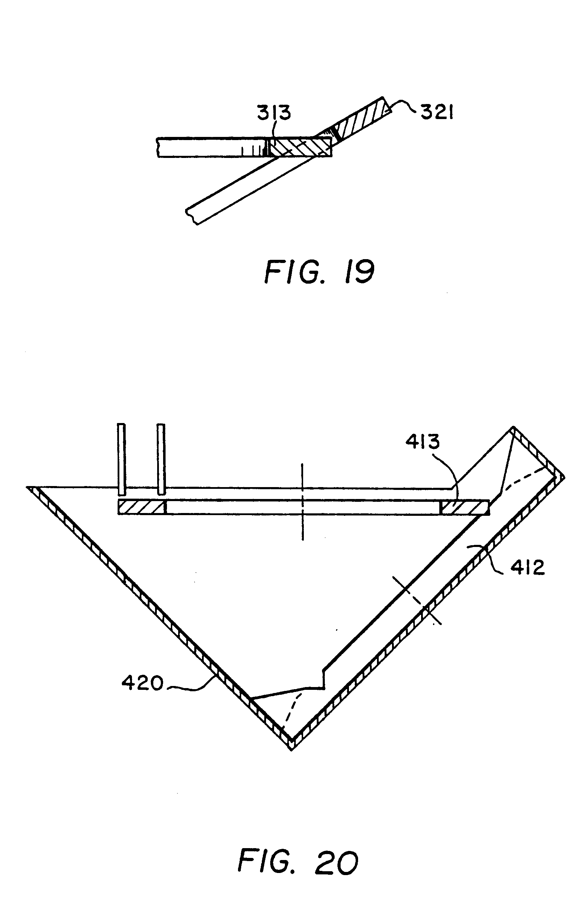

Figure 19 illustrates the orientation between the ring 313 and the conveyor ring 321. The conveyor ring 321 is provided at a higher disposition relative to the ring 313. In this manner, articles conveyed upwardly by means of the conveyor ring 321 fall onto the ring 313 and are thereafter qualified.

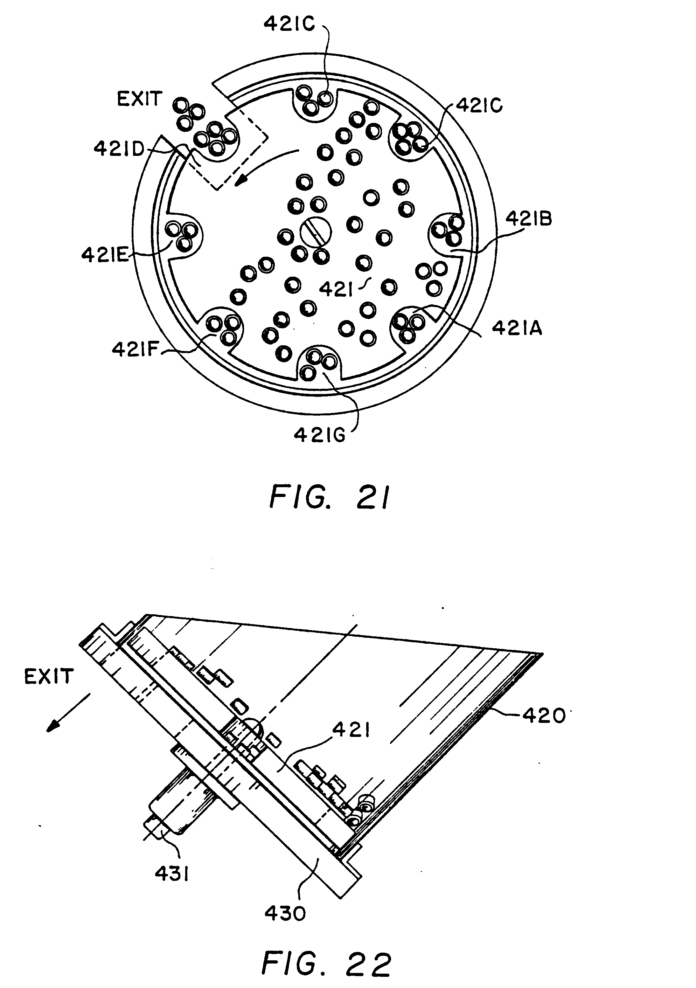

Figures 20-22 illustrate another embodiment of the present invention. In this embodiment a disc 421 is provided for conveying articles within a hopper 420 upwardly onto a ring 413. As illustrated in Figure 21, the disc 421 includes a plurality of pockets 421A-421G. Articles disposed within the hopper 420 fall into one of the pockets 421A-421G. Thereafter, the articles move upwardly to fall onto the upper surface of the ring 413. The articles are rotated around the ring 413 and thereafter are discharged from the device after being qualified. Articles which are not in the proper predetermined orientation are returned to the hopper 420 for resupply by means of the disc 421.

As illustrated in Figure 22, the disc 421 may be disposed on a backup plate 430. The backup plate 430 is disposed as one wall of the hopper 420. A shaft 431 projects through the backup plate 430 for imparting rotation to the disc 421. A motor may be connected to the shaft 431 so as to convey articles from the hopper 420 upwardly to the ring 413.

The present invention illustrates two motors for imparting rotation to either the ring or the conveyor. It is anticipated that a single motor may be utilized to impart drive to both the ring and the conveyor. A suitable gearing arrangement would be provided to ensure that the ring and the conveyor are operated at the proper speed.

The conveyor illustrated in Figures 1-4 may include a plurality of bars disposed across the width thereof. In this manner, articles positioned within the hopper are engaged by the bars and are held on the conveyor as they are moved upwardly to be discharged onto the top surface of the ring. Any other suitable means of retaining the articles on the conveyor during their journey upwardly may be incorporated into the present invention.

**Claims**

1. A rotating ring orienting feeder (10, 100) having

   a stationary hopper (20, 120, 220, 320, 420) for containing a supply of articles (A), characterized by:

   a flat ring (13, 113, 213, 313, 413) having an outer peripheral surface and an inner peripheral surface with a central opening, at least that portion of said ring on which incorrectly oriented articles (A) are returned to said hopper being positioned directly above and inside the periphery of said hopper (20, 120, 220, 320, 420);

   support means (16, 116, 190, 193, 196, 281, 286, 316) for rotatably supporting said ring (13, 113, 213, 313, 413) in a substantially horizontal position at spaced locations with respect to the ring;

   conveying means (21, 121, 221, 321, 421) mounted within said hopper (20, 120, 220, 320, 420) below said ring (13, 113, 213, 313, 413) and projecting upwardly to a point above said ring (13, 113, 213, 313, 413) for supplying articles (A) from said hopper (20, 120, 220, 320, 420) to said ring (13, 113, 213, 313, 413);

   and drive means (18, 22, 122) for imparting rotation to said ring (13) and for driving said conveying means (21, 121, 221, 321, 421).

2. A rotating ring orienting feeder according to claim 1, wherein said support means (16, 116, 190, 193, 196, 281, 286, 316) includes rollers mounted to engage said inner or outer peripheral surface for supporting and guiding the ring (13, 113, 213, 313, 413)

3. A rotating ring orienting feeder according to claim 1, wherein said ring (113) includes a block (195) extending downwardly from a lower surface of said ring (113) and said support means (196) includes rollers mounted to engage an inner peripheral surface of said block (195) for supporting and guiding the ring (113).

4. A rotating ring orienting feeder according to claim 3 wherein said support means (196) includes three rollers and said drive means (18,22) is operatively connected to at least one roller for imparting rotation to said ring (113).

5. A rotating ring orienting feeder according to claim 1, wherein said drive means (18, 22, 122) includes a first drive motor (18) operatively connected to said support means (16, 116, 190, 193, 196, 281, 286, 316) for rotating said ring (13, 113, 213, 313, 413) and a second drive motor (22) operatively connected to said conveying means (21, 121, 221, 321, 421) for imparting rotation to said conveying means (21, 121, 221, 321, 421).

6. A rotating ring orienting feeder according to any one of claims 1-5 further including a wall (30, 130, 160, 230, 330) disposed adjacent to an upper surface of said ring (13) for dividing articles (A) disposed on said ring (13) into two files.

7. A rotating ring orienting feeder according to any one of claims 1-6 including an exit ramp (31), articles divided on said ring are qualified on either side of said ring (13) and thereafter exit from said rotating ring orienting feeder on said exit ramp (31, 131, 231).

8. A rotating ring orienting feeder according to any of claims 1 to 7 wherein said ring (13) includes an upper surface with a depression (113 B) for qualifying articles on said ring.

9. A method for separating incorrectly oriented articles from correctly oriented articles (A) on a rotating ring wherein articles (A) are supplied into a stationary hopper (20, 120, 220, 320, 420) and including conveying articles (A, A) upwardly by means of a conveyor from said hopper (20, 120, 220, 320, 420) to a flat, horizontal rotating ring (13, 113, 213, 313, 413) having a central opening;

   separating said articles (A) on the upper surface, on one or both sides, of said ring (13, 113, 213, 313, 413) wherein the articles (A) which are not disposed in a predetermined orientation are directly returned from said ring to said hopper (20, 120, 220, 320, 420) from where they are (13, 113, 213, 313, 413) resupplied,

   discharging articles (A) disposed in the predetermined orientation from said ring (13, 113, 213, 313, 413)

**Patentansprüche**

1. Vorrichtung zum Zuführen und Ausrichten mit rotierendem Ring (10, 100) umfassend einen stationären Vorratstrichter (20, 120, 220, 320, 420) zur Aufnahme eines Vorrats an Gegenständen (A),

   **gekennzeichnet durch**

   einen flachen Ring (13, 113, 213, 313, 413), welcher eine äußere Umfangsfläche und eine innere Umfangsfläche mit einer zentralen Öffnung aufweist, wobei zumindest der Teil des Ringes, auf welchem falsch ausgerichtete Gegenstände (A) zu dem Vorratstrichter zurückgeführt werden, direkt über und innerhalb des Umfangs des Vorratstrichters (20, 120, 220, 320, 420) angeordnet ist;
Haltevorrichtungen (16, 116, 190, 193, 196, 281, 286, 316) zur drehbaren Lagerung des Ringes (13, 113, 213, 313, 413) in einer im wesentlichen horizontalen Position an in bezug auf den Ring beabstandeten Stellen;
Fördervorrichtungen (21, 121, 221, 321, 421), die innerhalb des Vorratstrichters (20, 120, 220, 320, 420) unterhalb des Ringes (13, 113, 213, 313, 413) angeordnet sind und sich nach oben bis zu einem Punkt oberhalb des Ringes (13, 113, 213, 313, 413) erstrecken, um Gegenstände (A) von dem Vorratstrichter (21, 120, 220, 320, 420) dem Ring (13, 113, 213, 313, 413) zuzuführen;
sowie Antriebsvorrichtungen (18, 22, 122) zum Drehen des Ringes (13) und für den Antrieb der Fördervorrichtungen (21, 121, 221, 321, 421).

2. Vorrichtung zum Zuführen und Ausrichten mit rotierendem Ring nach Anspruch 1, wobei die Haltevorrichtung (16 116, 190, 193, 196, 281, 286, 316) Rollen umfaßt, die so angeordnet sind, daß sie in die innere oder äußere Umfangsfläche zum Halten und Führen des Ringes (13, 113, 213, 313, 413) greifen.

3. Vorrichtung zum Zuführen und Ausrichten mit rotierendem Ring nach Anspruch 1, wobei der Ring (113) einen Block (195) aufweist, der sich von der unteren Fläche des Ringes (113) nach unten erstreckt, und wobei die Haltevorrichtung (196) Rollen aufweist, die so angeordnet sind, daß sie in eine innere Umfangsfläche des Blocks (195) greifen, um den Ring (113) zu halten und zu führen.

4. Vorrichtung zum Zuführen und Ausrichten mit rotierendem Ring nach Anspruch 3, wobei die Haltevorrichtung (196) drei Rollen aufweist und die Antriebsvorrichtung (18, 22) wirksam mit zumindest einer Rolle zum Drehen des Ringes (113) verbunden ist.

5. Vorrichtung zum Zuführen und Ausrichten mit rotierendem Ring nach Anspruch 1, wobei die Antriebsvorrichtung (18, 22, 122) einen ersten Antriebsmotor (18), der wirksam mit der Haltevorrichtung (16, 116, 190, 193 196, 281, 286, 316) zum Drehen des Ringes (13, 113, 213, 313, 413) verbunden ist, und einen zweiten Antriebsmotor (22) aufweist, der wirksam mit den Fördervorrichtungen (21, 121, 221, 321, 421) zum Drehen der Fördervorrichtungen (21, 121, 221, 321, 421) verbunden ist.

6. Vorrichtung zum Zuführen und Ausrichten mit rotierendem Ring nach einem der Ansprüche 1 bis 5, die ferner eine Wand (30, 130, 160, 230, 330) aufweist, welche bei einer oberen Fläche des Ringes (13) angeordnet ist, um die auf dem Ring (13) angeordneten Gegenstände in zwei Reihen aufzuteilen.

7. Vorrichtung zum Zuführen und Ausrichten mit rotierendem Ring nach einem der Ansprüche 1 bis 6, die eine Ausführrampe (31) aufweist, wobei die Gegenstände, die auf dem Ring aufgeteilt wurden, auf die eine oder andere Seite des Ringes (13) klassifiziert werden und anschließend aus der Vorrichtung zum Zuführen und Ausrichten mit rotierendem Ring auf der Ausführrampe (31, 131, 231) austreten.

8. Vorrichtung zum Zuführen und Ausrichten mit rotierendem Ring nach einem der Ansprüche 1 bis 7, wobei der Ring (13) eine obere Fläche mit einer Vertiefung (113 B) zum Klassifizieren der Gegenstände auf dem Ring aufweist.

9. Verfahren zum Trennen von falsch ausgerichteten Gegenständen von richtig ausgerichteten Gegenständen (A) auf einem rotierenden Ring, wobei die Gegenstände (A) einem stationären Vorratstrichter (20, 120, 220, 320, 420) zugeführt werden, umfassend:
Fördern von Gegenständen (A) durch einen Förderer von dem Vorratstrichter (20, 120, 220, 320, 420) nach oben zu einem flachen, horizontalen, rotierenden Ring (13, 113, 213, 313, 413) mit einer zentralen Öffnung;
Aufteilen der Gegenstände (A) auf der oberen Fläche, auf einer oder beiden Seiten des Ringes (13, 113, 213, 313, 413), wobei die Gegenstände (A), die nicht in einer festgelegten Ausrichtung angeordnet sind, unmittelbar von dem Ring zu dem Vorratstrichter (20, 120, 220, 320, 420) zurückgeführt werden, von wo sie erneut zugeführt werden (13, 113, 213, 313, 413); und Abgeben der Gegenstände (A), die in der festgelegten Ausrichtung angeordnet sind, von dem Ring (13, 113, 213, 313, 413).

**Revendications**

1. Dispositif d'alimentation et d'orientation à anneau rotatif (10, 100) comportant
une trémie fixe (20, 120, 220, 320, 420) destinée à contenir une série de produits caractérisée par :

un anneau plat, (13, 113, 213, 313, 413) présentant une surface périphérique extérieure et une surface périphérique intérieure avec une ouverture centrale, au moins le portion de l'anneau sur laquelle les produits mal orientés (A) sont renvoyés à la trémie et positionnés directement au-dessus et à l'intérieur de le périphérie de la trémie (20, 120, 220, 320, 420) ;

des moyens de support (16, 116, 190, 193, 196, 281, 286, 316) destinés à supporter de façon rotative l'anneau (13, 113, 213, 313, 413) dans une position sensiblement horizontale en des emplacements espacés par rapport, à l'anneau ;

des moyens de manutention ou transport (21 121, 221, 321, 421) montés à l'intérieur de la trémie (20, 120, 220, 320, 420) au-dessous de l'anneau (13, 113, 213, 313, 413) et faisant saillie vers le haut jusqu'à un point situé au-dessus de l'anneau (13, 113, 213, 313, 413) pour amener des produits (A) à partir de la trémie (20, 120, 220, 320, 420) à destination de l'anneau (13, 113, 213, 313, 413) ;

et des moyens d'entraînement (18, 22, 122) destinés à transmettre la rotation à l'anneau (13) et à entraîner les moyens de manutention de transport (21, 121, 221, 321, 421).

2. Dispositif d'alimentation et d'orientation à anneau rotatif selon la revendication 1, dans lequel les moyens de support (16, 116, 190, 193, 196, 281, 286, 316) comprennent des rouleaux montés de façon à coopérer avec le surface périphérique intérieure ou extérieure de façon à supporter et à guider l'anneau (13, 113, 213, 313, 413).

3. Dispositif d'alimentation et d'orientation à anneau rotatif selon la revendication 1, dans lequel l'anneau (113) comprend un bloc (195) s'étendent vers le bas à partir de la surface inférieure de l'anneau (113) et les moyens de support (196) comprennent des rouleaux montés de façon à venir en contact avec la surface périphérique intérieure du bloc (195) de façon à supporter et à guider l'anneau (113).

4. Dispositif d'alimentation et d'orientation à anneau rotatif selon la revendication 3, dans lequel les moyens de support (196) comprennent trois rouleaux et les moyens d'entraînement (18, 22) sont raccordés de façon opérante à au moins un rouleau pour transmettre la rotation à l'anneau (113).

5. Dispositif d'alimentation et d'orientation à anneau rotatif selon la revendication 1, dans lequel les moyens d'entraînement (18, 22, 122) comprennent un premier moteur d'entraînement (18) raccordé de façon opérante aux moyens de support (16, 116, 190, 193, 196, 281, 286, 316) pour mettre en rotation l'anneau (13, 113, 213, 313, 413) et un second moteur d'entraînement (22) raccordé de façon opérante aux moyens de manutention de transport (21, 121, 221, 321, 421) de façon à transmettre la rotation aux moyens de transport ou de manutention (21, 121, 221, 321, 421).

6. Moyen d'alimentation et d'orientation à anneau rotatif selon l'une quelconque des revendications 1-5, comprenant de plus une paroi (30, 130, 160, 230, 330) disposée de façon contiguë à une surface supérieure de l'anneau (13) de façon à séparer des produits (A) disposés sur l'anneau (13) dans deux files.

7. Dispositif d'alimentation et d'orientation à anneau rotatif selon l'une quelconque des revendications 1-6, comprenant une rampe de sortie (31), les produits séparés sur l'anneau sont répartis de chaque côté de cet anneau (13) et quittent ensuite le dispositif d'alimentation et d'orientation à anneau rotatif sur cette rampe de sortie (31, 131, 231).

8. Dispositif d'alimentation et d'orientation à anneau rotatif selon l'une quelconque des revendications 1-7, dans lequel l'anneau (13) comprend une surface supérieure avec une dépression (113 B) destinée à séparer les produits sur cet anneau.

9. Procédé destiné à séparer les produits mal orientés des produits correctement orientés (A) sur un anneau rotatif, dans lequel les produits (A) sont amenés sur une trémie fixe (20, 120, 220, 320, 420) et comprenant l'acheminement de produits (A, A) vers le haut au moyen d'un convoyeur ou transporteur à partir de la trémie (20, 120, 220, 320, 420) à destination d'un anneau rotatif horizontal (13, 113, 213, 313, 413) comportant une ouverture centrale,

séparer les produits (A) sur la surface supérieure sur un ou sur les deux côtés, de l'anneau (13, 113, 213, 313, 413) dans lequel les produits (A) qui ne sont pas disposés dans une orientation prédéterminée sont renvoyés directement de cet anneau à la trémie (20, 120, 220, 320, 420) d'où ils sont (13, 113, 213, 313, 413) réalimentés,

décharger ou évacuer les produits (A) disposés dans l'orientation prédéterminée à partir de l'anneau (13, 113, 213, 333, 413).

FIG. 1

FIG. 2

FIG. 3.

FIG. 4

FIG. 5

FIG. 6

STORAGE LANE

FIG. 7

FIG. 8

FIG. 9

FIG. 10

FIG. 11

FIG. 12

FIG. 13

FIG. 14

FIG. 15

FIG. 16

331

316

320

330 A

330

FIG. 17

313

320

321

324

316

316A

310

FIG. 18

313    321

FIG. 19

413

412

420

FIG. 20

421C

EXIT

421D

421E

421F

421G

421C

421B

421A

421

FIG. 21

EXIT

421

420

431

430

FIG. 22